# EUROPÄISCHE PATENTANMELDUNG

(11) **EP 2 068 010 A2**
(43) Veröffentlichungstag der Anmeldung: **10.06.2009**
(21) Anmeldenummer: 08020266.6
(22) Anmeldetag: 21.11.2008
(51) Int. Cl.: F16B 13/06

(54) **Anker und Montagewerkzeug für den Anker**

(30) Priorität: 06.12.2007 DE 102007058772
(71) Anmelder: fischerwerke GmbH & Co. KG, 72178 Waldachtal (DE)
(72) Erfinder: Kaupp, Andreas, 72280 Dornstetten (DE)

(57) **Zusammenfassung**

Die Erfindung betrifft einen Anker (1) mit einem Befestigungsgewinde (2), auf das eine Mutter (7) aufgeschraubt ist. Die Erfindung schlägt eine gewölbte Lochscheibe (3), deren Innenrand (4, 5) mit dem Befestigungsgewinde (2) in Eingriff steht, als Widerlager für die Mutter (7) vor. Wird die Lochscheibe (3) zwischen der Mutter (7) beim Setzen des Ankers (1) zwischen der Mutter (7) und einem zu befestigenden Gegenstand flachgedrückt, vergrößert sich ihr Lochdurchmesser und ihr Innenrand (4, 5) kommt vom Befestigungsgewinde (2) frei, so dass die Mutter (7) festgezogen werden kann.

## Beschreibung

Die Erfindung betrifft einen Anker mit den Merkmalen des Oberbegriffs des Anspruchs 1 sowie ein Montagewerkzeug für den Anker mit den Merkmalen des Oberbegriffs des Anspruchs 3. Insbesondere ist die Erfindung für einen Spreizanker, der durch Aufspreizen beispielsweise einer Spreizhülse in einem Bohrloch in einem Ankergrund verankerbar ist, vorgesehen. Der Anker kann auch als Dübel oder Spreizdübel aufgefasst werden.

Ein derartiger Anker ist offenbart in der Offenlegungsschrift DE 38 17 512 A1. Der bekannte Anker ist stiftförmig und weist ein Befestigungsgewinde an einem hinteren Ende auf. Auf das hintere Ende des Ankers ist ein zu befestigender, ein Durchgangsloch aufweisender Gegenstand mit seinem Durchgangsloch so aufsetzbar, dass das Befestigungsgewinde des Ankers aus dem Durchgangsloch des Gegenstands vorsteht. Zur Befestigung des Gegenstands ist eine Mutter auf das Befestigungsgewinde des Ankers aufschraubbar.

Der Anker weist eine Spreizhülse auf, die durch Einziehen eines Spreizkonus aufspreizbar ist und dadurch den Anker in einem Bohrloch verankert. Das Aufspreizen kann auch durch Aufschieben der Spreizhülse auf den Spreizkonus erfolgen, was ebenfalls als Einziehen des Spreizkonus in die Spreizhülse im Sinne der Erfindung verstanden werden soll.

Zur Verankerung in einem Bohrloch muss der bekannte Anker mit der Spreizhülse in ein Bohrloch eingebracht werden, was üblicherweise durch Einschlagen mit Hammerschlägen erfolgt. Zur Befestigung eines Gegenstands muss der Gegenstand mit einem Durchgangsloch auf das aus dem Ankergrund vorstehende hintere Ende des Ankers aufgesetzt und eine Mutter auf das Befestigungsgewinde des Ankers aufgeschraubt und festgezogen werden.

Aufgabe der Erfindung ist, einen Anker mit vereinfachter Montagemöglichkeit und ein Montagewerkzeug für den Anker vorzuschlagen.

Diese Aufgabe wird erfindungsgemäß durch die Merkmale der Ansprüche 1 und 3 gelöst. Der erfindungsgemäße Anker weist eine Lochscheibe auf, die so gewölbt ist, dass ihr Innenrand mit dem Befestigungsgewinde des Ankers in Eingriff steht. Es kann insbesondere eine Kante des Innenrands, also eine umlaufende Kante am Übergang vom Loch zu einer Stirnfläche der Lochscheibe mit dem Befestigungsgewinde in Eingriff stehen. Der Eingriff kann umlaufend über den gesamten Umfang, unterbrochen oder auch an einer oder mehreren Stellen des Umfangs bestehen. Neben dem Loch kann die Lochscheibe weitere Ausnehmungen aufweisen, beispielsweise um die Federwirkung zu verlassen oder Material zu sparen. Vorzugsweise ist die Lochscheibe nach Art einer Tellerfeder gewölbt, sie kann aber auch eindimensional gewölbt sein. Auch muss die Lochscheibe nicht rund gewölbt, sondern kann auch abgekantet sein. Auch muss die Lochscheibe nicht kreisförmig, sondern kann eckig sein, was auch für ihr Loch gilt. Durch die Wölbung ist ein Lochdurchmesser der Lochscheibe verkleinert, so dass ihr Innenrand mit dem Befestigungsgewinde des Ankers in Eingriff steht. Durch den Eingriff im Befestigungsgewinde ist die Lochscheibe axial am Anker fixiert. Die Lochscheibe bildet dadurch ein Widerlager für eine auf das Befestigungsgewinde aufgeschraubte Mutter. Die Mutter lässt sich bis in Anlage an der Lochscheibe auf das Befestigungsgewinde aufschrauben.

Die Erfindung ermöglicht ein Einschlagen des Ankers mit einem Bohrhammer, dessen Drehantrieb eingeschaltet ist. Da sich die Mutter nicht weiterdreht, wenn sie an der Lochscheibe anliegt, wird der Anker eingeschlagen. Liegt die Lochscheibe auf einem zu befestigenden Gegenstand, durch den der Anker in den Ankergrund gesteckt ist, auf, wird die Lochscheibe durch die Schläge des Bohrhammers zwischen dem zu befestigenden Gegenstand und der Mutter flachgedrückt. Durch das Flachdrücken vergrößert sich der Lochdurchmesser der Lochscheibe, ihr Innenrand kommt vom Befestigungsgewinde des Ankers frei und die Mutter ist weiter auf dem Befestigungsgewinde schraubbar. Sie wird mit dem Bohrhammer festgezogen und der zu befestigende Gegenstand dabei gegen den Ankergrund gespannt. Die Erfindung ermöglicht das Setzen des Ankers und das Festspannen des zu befestigenden Gegenstands mit einem Bohrhammer in einem Arbeitsgang. Es genügt, wenn die Lochscheibe in der Richtung axial fixiert ist, in der sie als Widerlager für die Mutter dient, in der entgegengesetzten Richtung ist die Fixierung entbehrlich. Es ist vorgesehen, dass die Lochscheibe von der aufgeschraubten Mutter aus gesehen konvex gewölbt ist, d.h. dass die Mutter am Innenrand der Lochscheibe anliegt und die Lochscheibe mit ihrem Außenrand an dem zu befestigenden Gegenstand anliegt. Allerdings ist auch eine umgekehrte Wölbung der Lochscheibe möglich.

In bevorzugter Ausgestaltung der Erfindung weist der Anker einen Spreizkörper und eine Spreizhülse auf, die durch Einziehen des Spreizkörpers bzw. umgekehrt durch Aufschieben der Spreizhülse auf den Spreizkörper aufspreizbar ist und dadurch den Anker in einem Bohrloch verankert. Der Spreizkörper ist insbesondere, allerdings nicht zwingend, konisch, er kann beispielsweise auch pyramiden- oder keilförmig sein, wobei die Grundfläche der Pyramide ein Viereck oder ein anderes Mehreck sein kann.

Das erfindungsgemäße Montagewerkzeug mit den Merkmalen des Anspruchs 3 ist insbesondere stift- oder rohrförmig. Es weist eine Mutteraufnahme an einem und eine Bohreraufnahme am anderen Ende auf. Die Mutteraufnahme ist auf eine Mutter aufsetzbar, die auf das Befestigungsgewinde des erfindungsgemäßen Ankers aufgeschraubt ist. Die Mutteraufnahme des Montagewerkzeugs ist durch Formschluss drehfest mit der Mutter, sie weist beispielsweise einen Innensechskant für eine Sechskantmutter auf. Außerdem überträgt die Mutteraufnahme Schlagenergie vom Montagewerkzeug auf die Mutter und/oder den Anker. Die Übertragung der Schlagenergie kann durch einen Grund der Mutteraufnahme erfolgen.

Die Bohreraufnahme ist der Mutteraufnahme vergleichbar ausgebildet, allerdings an einen Bohrer angepasst. Die Bohreraufnahme ist durch Formschluss drehfest mit einem Bohrer, auf den sie aufgesetzt ist, und überträgt Schlagenergie vom Bohrer auf das Montagewerkzeug. Es genügt, wenn der Formschluss in einer Drehrichtung wirksam ist, nämlich im Sinne eines Aufschraubens der Mutter auf das Befestigungsgewinde des Ankers und im Sinne eines Festziehens der Mutter.

Zum Setzen des Ankers lässt sich das erfindungsgemäße Montagewerkzeug auf einen Bohrer aufsetzen, mit dem zuvor ein Bohrloch zur Verankerung des erfindungsgemäßen Ankers in einen Ankergrund gebohrt worden ist. Der Bohrer muss nicht ausgespannt werden. Mit dem Montagewerkzeug wird mit einem Bohrhammer der Anker in das Bohrloch eingebracht und die Mutter festgezogen. Ein Bohrantrieb des Bohrhammers ist die ganze Zeit eingeschaltet, das Setzen des Ankers und das Festziehen der Mutter erfolgt durchgehend ohne Unterbrechung.

Die Erfindung wird nachfolgend anhand eines in der Zeichnung dargestellten Ausführungsbeispiels näher erläutert. Es zeigen:
- Figur 1: einen Anker gemäß der Erfindung im ungesetzten Zustand;
- Figur 2: eine vergrößerte Einzelheit gemäß Kreis II in Figur 1;
- Figur 3: eine Einzelheit gemäß Pfeil III in Figur 1 im gesetzten Zustand;
- Figur 4: eine vergrößerte Einzelheit gemäß Kreis IV in Figur 3;
- Figur 5: ein Montagewerkzeug gemäß der Erfindung schräg von vorn; und
- Figur 6: ein hinteres Ende des Montagewerkzeugs aus Figur 5.

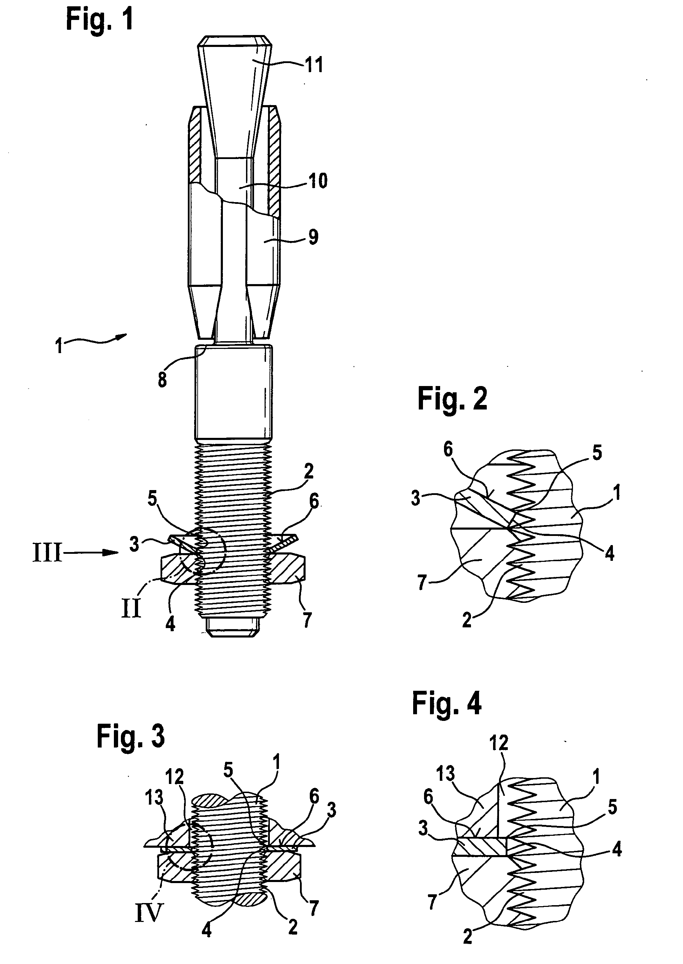

Der in Figur 1 dargestellte, erfindungsgemäße Anker 1 ist stiftförmig mit einer Durchmesserstufung und weist ein Befestigungsgewinde 2 an seinem hinteren Ende auf. Mit dem Befestigungsgewinde 2 steht eine Lochscheibe 3 in Eingriff. Die Lochscheibe 3 ist nach Art einer Tellerfeder gewölbt, wodurch ihr Lochdurchmesser verkleinert ist. Wie in der Vergrößerung in Figur 2 zu sehen, ist aufgrund der Wölbung der Lochscheibe 3 ihr Innenrand bzw. eine umlaufende Kante 5 nach innen in Eingriff mit dem Befestigungsgewinde 2 des Ankers 1 gelangt. Die umlaufende Kante 5 befindet sich am Übergang vom Innenrand 4 zu einer konkaven Stirnfläche 6 der Lochscheibe 3. Durch den Eingriff des Innenrands 4 bzw. der umlaufenden Kante 5 am Innenrand 4 ist die Lochscheibe 3 axial am Anker 1 fixiert. Sie bildet ein Widerlager für eine auf das Befestigungsgewinde 2 aufgeschraubte Mutter 7.

In einem Längsmittelbereich verkleinert der Anker 1 seinen Durchmesser an einer Ringstufe 8. Die Ringstufe 8 bildet einen Axialanschlag für eine Spreizhülse 9, die auf einem durchmesserkleineren Abschnitt 10 des Ankers 1 angeordnet ist. Die Spreizhülse 9 ist eine geschlitzte Federhülse vergleichbar einer Spannhülse, die sich an beiden Enden konisch verjüngt. Der durchmesserkleinere Abschnitt 10 des Ankers 1 geht einstückig in einen Spreizkörper, und zwar einen Spreizkonus 11, über.

Zur Verankerung wird der Anker 1 mit seinem Spreizkonus 11 voraus in ein nicht dargestelltes Bohrloch in einem nicht dargestellten Ankergrund eingebracht. Da die Lochscheibe 3 auf dem Befestigungsgewinde 2 des Ankers 1 axial fixiert ist und ein Widerlager für die Mutter 7 bildet, kann eine Schlagenergie zum Einbringen des Ankers 1 in das Bohrloch über die Mutter 7 aufgebracht werden. Da die Mutter 7 wegen der als Widerlager wirkenden Lochscheibe 3 nicht weiter auf das Befestigungsgewinde 2 aufschraubbar ist als bis in Anlage an der Lochscheibe 3, kann das Einbringen des Ankers 1 in das Bohrloch mit einem nicht dargestellten Bohrhammer erfolgen, dessen Drehantrieb zum Einbringen des Ankers 1 in das Bohrloch nicht abgeschaltet werden muss.

Der Anker 1 wird durch ein Durchgangsloch 12 eines zu befestigenden Gegenstands 13, von dem in Figuren 3 und 4 lediglich ein Bruchstück dargestellt ist, in das Bohrloch im Ankergrund eingebracht. Sitzt die Lochscheibe 3 auf dem zu befestigenden Gegenstand 13 auf, wird sie zwischen der Mutter 7 und dem Gegenstand 13 flachgedrückt, wie es in Figuren 3 und 4 zu sehen ist. Beim Flachdrücken der Lochscheibe 3 kippt ihr Innenrand 4 zurück, die umlaufende Kante 5 bewegt sich nach außen, ihr Innendurchmesser vergrößert sich und der Innenrand 4 bzw. dessen umlaufende Kante 5 kommen außer Eingriff vom Befestigungsgewinde 2 des Ankers 1, wie es insbesondere in Figur 4 zu sehen ist. Die Axialfixierung der Lochscheibe 3 ist aufgehoben, sie wirkt nicht mehr als Widerlager, so dass die Mutter 7 auf dem Befestigungsgewinde 2 drehbar ist und festgezogen werden kann. Sie zieht dabei den Spreizkonus 11 in die Spreizhülse 9 ein, die aufgespreizt wird und den Anker 1 im Bohrloch verankert.

Wie bereits erläutert kann das Einbringen des Ankers 1 in ein Bohrloch mit einem nicht dargestellten Bohrhammer ohne Abschalten des Drehantriebs erfolgen. Sitzt die Lochscheibe 3 auf dem zu befestigenden Gegenstand 13 auf, wird sie flachgedrückt und gelangt außer Eingriff vom Befestigungsgewinde 2. Der Drehantrieb des Bohrhammers zieht die Mutter 7 fest, zieht dabei den Spreizkonus 11 in die Spreizhülse 9 ein, spreizt die Spreizhülse 9 auf und verankert den Anker 1 dadurch im Bohrloch. Die Mutter 7 spannt den zu befestigenden Gegenstand 13 gegen den Ankergrund. Die Verankerung des Ankers 1 und die Befestigung des Gegenstands 13 kann dadurch mit einem Bohrhammer durchgehend ohne Absetzen und ohne Ab- oder Zuschalten des Drehantriebs erfolgen.

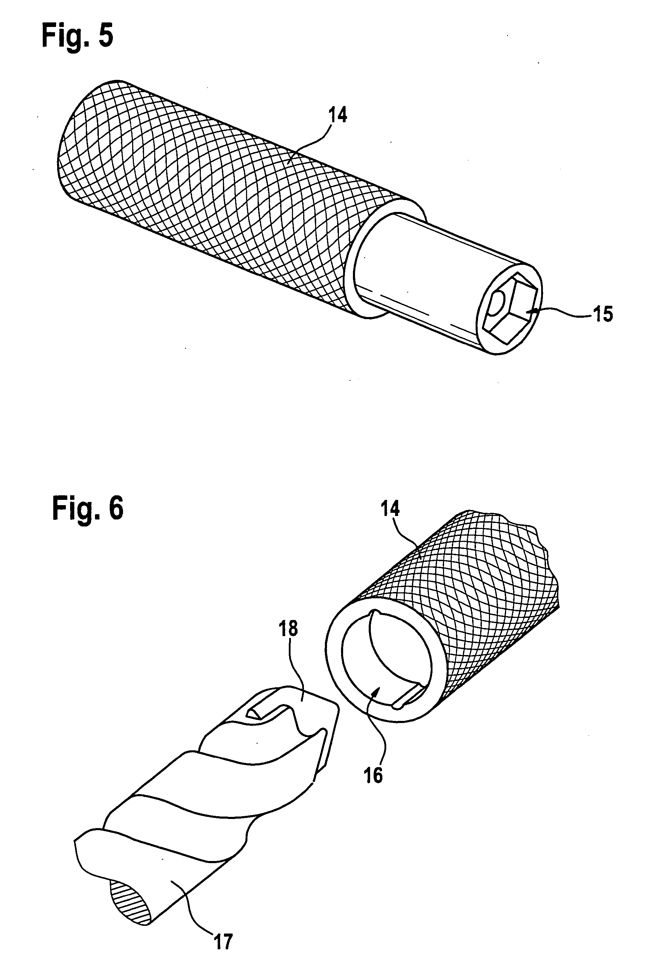

Das in Figur 5 dargestellte, erfindungsgemäße Montagewerkzeug 14 ist stiftförmig und weist eine zur Mutter 7 komplementäre Mutteraufnahme 15 an einem Ende auf. Im Falle einer Sechskantmutter 7 ist die Mutteraufnahme 15 ein Innensechskant. Über die Mutteraufnahme 15 ist die Schlagenergie zum Einbringen des Ankers 1 in ein Bohrloch über die Mutter 7 und/oder unmittelbar auf den Anker 1 übertragbar.

Am anderen Ende weist das Montagewerkzeug 14 wie in Figur 6 zu sehen eine Bohreraufnahme 16 zum Aufsetzen des Montagewerkzeugs 14 auf einen Bohrer 17 auf. Eine Bohrerspitze passt formschlüssig in die Bohreraufnahme 16, so dass das Montagewerkzeug 14 drehfest mit dem Bohrer 17 ist und Schlagenergie vom Bohrer 17 auf das Montagewerkzeug 14 übertragbar ist. Im dargestellten Ausführungsbeispiel ist die Bohreraufnahme 16 so geformt, dass eine Schneidplatte 18 in der Spitze des Bohrers 17, die seitlich etwas aus dem Bohrer 17 vorsteht, formschlüssig vergleichbar einer Klauenkupplung in die Bohreraufnahme 16 des Montagewerkzeugs 14 eingreift. Der Bohrer 17 ist ein Steinbohrer, der die Schneidplatte 18 aufweist.

Nach dem Bohren eines Bohrlochs mit dem Bohrer 17 wird das Montagewerkzeug 14 mit der Bohreraufnahme 16 auf die Spitze des Bohrers 17 aufgesetzt, das Montagewerkzeug 14 wird mit der Mutteraufnahme 15 auf das hintere Ende des Ankers 1 und die dort aufgeschraubte Mutter 7 aufgesetzt und der Anker 1 in bereits beschriebener Weise verankert und die Mutter 7 festgezogen. Dabei ist die ganze Zeit über der Drehantrieb des Bohrhammers eingeschaltet.

### Bezugszeichenliste

### Anker und Montagewerkzeug für den Anker

- 1: Anker
- 2: Befestigungsgewinde
- 3: Lochscheibe
- 4: Innenrand
- 5: Kante
- 6: konkave Stirnfläche
- 7: Mutter
- 8: Ringstufe
- 9: Spreizhülse
- 10: durchmesserkleinerer Abschnitt
- 11: Spreizkonus
- 12: Durchgangsloch
- 13: Gegenstand
- 14: Montagewerkzeug
- 15: Mutteraufnahme
- 16: Bohreraufnahme
- 17: Bohrer
- 18: Schneidplatte

## Patentansprüche

1. Anker, der ein Befestigungsgewinde (2) zum Aufschrauben einer Mutter (7) zwecks Befestigung eines Gegenstands (13) am Anker (1) aufweist, **dadurch gekennzeichnet, dass** der Anker (1) eine Lochscheibe (3) aufweist, dass die Lochscheibe (3) gewölbt ist, so dass ein Innenrand (4, 5) der Lochscheibe (3) in Eingriff mit dem Befestigungsgewinde (2) des Ankers (1) steht, so dass die Lochscheibe (3) axial auf dem Anker (1) fixiert ist, und dass durch Flachdrücken der Lochscheibe (3) ihr Innenrand (4, 5) freikommt vom Befestigungsgewinde (2) des Ankers (1).

2. Anker nach Anspruch 1, **dadurch gekennzeichnet, dass** der Anker (1) einen Spreizkörper (11) und eine Spreizhülse (9) aufweist, die durch Einziehen des Spreizkörpers (11) in die Spreizhülse (9) aufspreizbar ist.

3. Montagewerkzeug für einen Anker (1), der ein Befestigungsgewinde (2) zum Aufschrauben einer Mutter (7) zwecks Befestigung eines Gegenstands (13) am Anker (1), eine Lochscheibe (3), die gewölbt ist, so dass ein Innenrand (4, 5) der Lochscheibe (3) in Eingriff mit dem Befestigungsgewinde (2) des Ankers (1) steht, so dass die Lochscheibe (3) axial auf dem Anker (1) fixiert ist und durch Flachdrücken der Lochscheibe (3) ihr Innenrand (4, 5) freikommt vom Befestigungsgewinde (2) des Ankers (1), **dadurch gekennzeichnet, dass** das Montagewerkzeug (14) eine Mutteraufnahme (15) zu einem durch Formschluss drehfesten Aufsetzen auf die Mutter (7) und zur Übertragung von Schlagenergie auf die Mutter (7) und/oder den Anker (1), und eine Bohreraufnahme (16) zu einem durch Formschluss drehfesten Aufsetzen auf einen Bohrer (17) und zum Übertragen von Schlagenergie vom Bohrer (17) auf das Montagewerkzeug (14), aufweist.
